# EUROPEAN PATENT APPLICATION

(11) **EP 0 604 997 A2**
(43) Date of publication of application: **06.07.1994**
(21) Application number: 93121066.0
(22) Date of filing: 29.12.1993
(51) Int. Cl.: C08L 83/04, C08K 5/54

(54) **Room temperature vulcanizable organopolysiloxane compositions**

(30) Priority: 30.12.1992 JP 361217/92
(71) Applicant: Shin-Etsu Chemical Co., Ltd., Chiyoda-ku Tokyo 100 (JP)
(72) Inventor: Kimura, Tsuneo, Annaka-shi, Gunma-ken (JP); Arai, Masatoshi, Annaka-shi, Gunma-ken (JP); Suzuki, Kazuyuki, Usui-gun, Gunma-ken (JP)
(74) Representative: Tiedtke, Harro, Dipl.-Ing.

(57) **Abstract**

This invention relates to a room temperature vulcanizable organopolysiloxane composition which comprises a diorganopolysiloxane whose molecular chain is terminated with a hydroxyl group at both ends thereof, a crosslinking agent consisting of iminoxysilanes and/or partial hydrolyzates thereof. an organic tin catalyst, and a basic inorganic filler. The composition is characterized by further comprising an organosilicon compound of the following formula 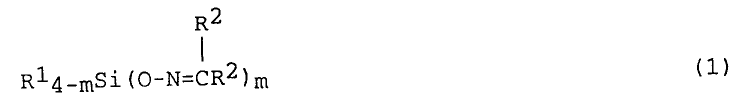
wherein two R⁴'s may be the same or different and independently represent a hydrogen atom or an unsubstituted or substituted monovalent hydrocarbon group, two R⁵'s may be the same or different and independently represent a hydrogen atom or an unsubstituted or substituted monovalent hydrocarbon group, R⁶ represents an alkyl group or an alkoxyalkyl group, a is a value of 0 or 1, n is zero or an integer of 1 to 3. The composition is useful for use as a sealant particularly to FIPG systems.

## Description

This invention relates to organopolysiloxane compositions and more particularly, to room temperature vulcanizable organopolysiloxane compositions which are adapted particularly for use as a sealant for automotive FIPG (formed in place gaskets) systems.

In recent years, there has been adopted a so-called FIPG system, which makes use of room temperature vulcanizable silicone rubbers, as a sealing technique of engines or thereabouts. Such a system has been highly estimated from the standpoints of workability, sealability, heat resistance and the like. In the system, it is the usual practice to add, to the room temperature vulcanizable silicone rubbers hitherto used in the FIPG system, basic filler additives such as zinc oxide, zinc carbonate, magnesium oxide, calcium carbonate and the like. Although they are relatively unlikely to suffer deterioration on contact with engine oils, gear oils and the like, the silicone rubbers using these basic fillers are disadvantageous in their short shelf stability prior to vulcanization.

We made studies on various additives for incorporation in silicone rubbers on the assumption that the above problems would be ascribed to the existence of functional groups, such as hydroxyl group, carbonyl group, carboxyl group and the like, in or on the surfaces of ordinary, commercially sold basic fillers. As a result, we found that addition of a specific type of organosilicon compound could solve the problems of the prior art silicone rubber compositions.

It is therefore an object of the invention to provide room temperature vulcanizable organopolysiloxane compositions which exhibit good shelf stability prior to vulcanization and can thus overcome the disadvantages of prior art counterparts.

It is another object of the invention to provide room temperature vulcanizable organopolysiloxane compositions which can yield vulcanized products having a good oil resistance and are thus suitable for use as a sealant in the FIPG system.

The above objects can be achieved, according to the invention by a room temperature vulcanizable organopolysiloxane composition which comprises (A) a diorganopolysiloxane terminated with a hydroxyl group at both ends of a molecule chain thereof, (B) at least one compound selected from the group consisting of an iminoxysilane of the following general formula (1) 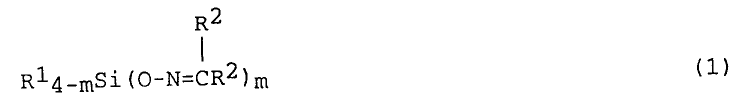
wherein R¹ represents an unsubstituted or substituted monovalent hydrocarbon group having from 1 to 12 carbon atoms preferably from 1 to 6 carbon atoms, each R² independently represents a hydrogen atom or an unsubstituted or substituted monovalent hydrocarbon group having from 1 to 12 carbon atoms, preferably from 1 to 6 carbon atoms, and m is an integer of 3 or 4, an iminoxysilane of the following general formula (2) 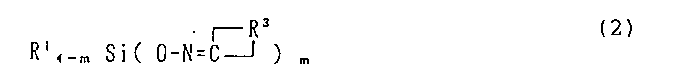
wherein R¹ has the same meaning as defined above, R³ represents an unsubstituted or substituted divalent hydrocarbon group having from 4 to 7 carbon atoms and m has the same meaning as defined above, and partial hydrolyzates of the compounds of the above formula (1) and (2), (C) an organic tin catalyst and (D) a basic filler in the form of powder, characterized in that said composition further comprises (E) an organosilicon compound of the following general formula (3) 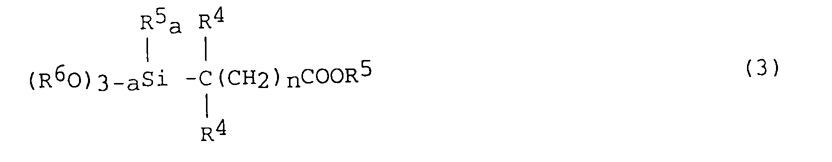
wherein two R⁴'s may be the same or different and independently represent a hydrogen atom or an unsubstituted or substituted monovalent hydrocarbon group having from 1 to 12 carbon atoms, preferably from 1 to 6 carbon atoms, two R⁵'s may be the same or different and independently represent a hydrogen atom or an unsubstituted or substituted monovalent hydrocarbon group having from 1 to 12 carbon atoms, preferably from 1 to 6 carbon atoms, R⁶ represents an alkyl group having from 1 to 8 carbon atoms or an alkoxyalkyl group having from 2 to 5 carbon atoms, a is a value of 0 or 1, n is zero or an integer of 1 to 3, the organosilicon compound being present in an amount of not less than 1 part by weight per 100 pats by weight of the diorganopolyslioxane, the basic filler being present in an amount of 1 to 500 parts by weight per 100 parts by weight of the diorganopolysiloxane.

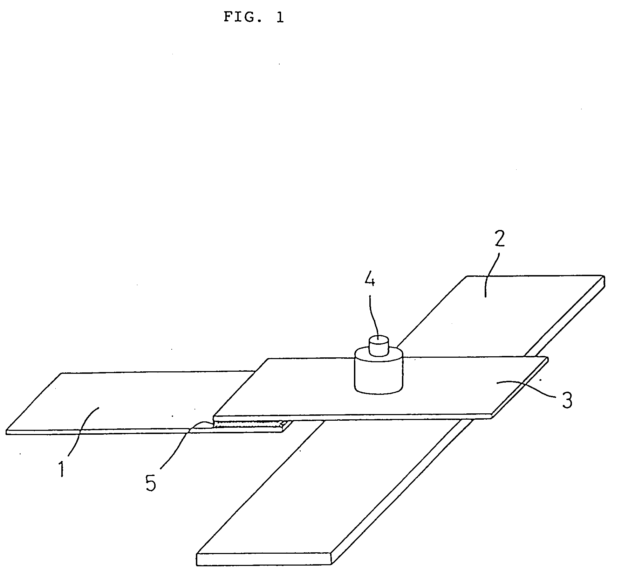

The present invention will become clear from the following detailed description with reference to the accompanying drawing in which Fig. 1 is a schematic view illustrating an oil-resistant adhesion test used in examples.

The respective ingredients of the organopolysiloxane composition according to the invention are described in detail.

### A) Diorganopolysiloxane

The diorganopolysiloxane used as the ingredient (A) has a hydroxyl group terminated at both ends of the molecule chain thereof. The diorganopolysiloxane useful in the present invention is represented, for example. by the following general formula (4) 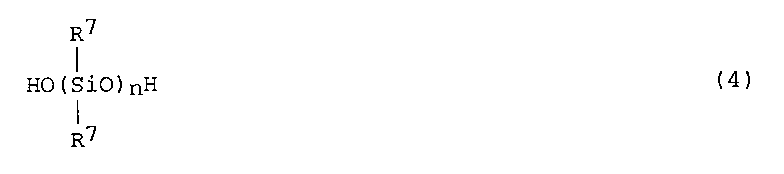
wherein two R⁷'s may be the same or different and independently represent an unsubstituted or substituted monovalent hydrocarbon group and n is an integer of 10 or over.

The unsubstituted monovalent hydrocarbon group represented by R⁷ in the formula (4) have 1 to 12 carbon atoms and includes, for example, a linear, branched and cyclic saturated hydrocarbon group having from 1 to 12 carbon atoms for the linear or branched group and not less than 3 carbon atoms for the cyclic group, and aliphatic and aromatic unsaturated hydrocarbon groups having from 2 to 12 carbon atoms. The substituted hydrocarbon groups include, for example, those hydrocarbon groups set out above wherein part or all of the hydrogen atoms thereof are replaced by a halogen atom such as chlorine, fluorine or the like. Although not limitative, specific and preferable examples for both unsubstituted and substituted hydrocarbon groups include an alkyl group such as a methyl group, an ethyl group, a propyl group, a butyl group, a pentyl group, an iso-pentyl group, a 2-ethylhexyl group or the like, a cycloalkyl group such as a cyclohexyl group, an alkenyl group such as a vinyl group, an allyl group, a benzyl group or the like, an aryl group such as a phenyl group, a tolyl group or the like, and a substituted hydrocarbon group such as a 3,3,3-trifluoropropyl group, a 3-chloropropyl group or the like.

The diorganopolysiloxane should preferably have a viscosity of 25 to 500,000 centistokes at 25°C. More preferably, the viscosity at 25°C is in the range of 1,000 to 100,000 centistokes.

Typical examples of the diorganopolysiloxane of the general formula (4) include the compounds of the following formulas 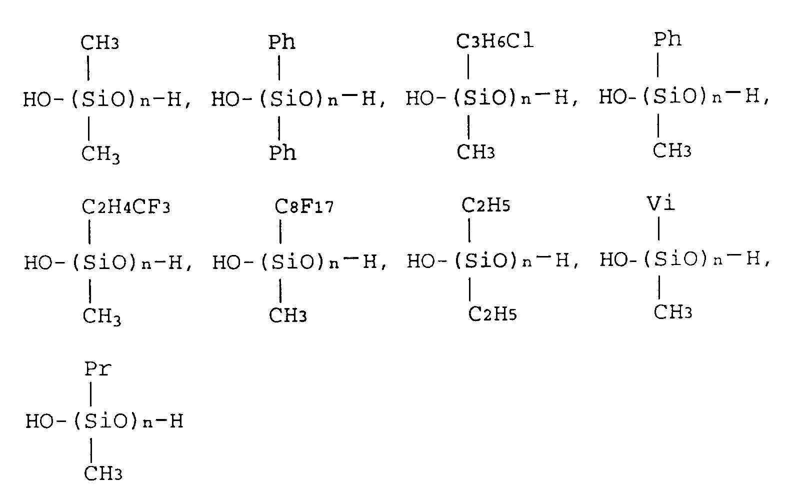
and the like. wherein Pr represents a propyl group, Ph represents a phenyl group, Vi represents a vinyl group, and n is an integer preferably ranging from 100 to 1,000.

### (B) Iminoxysilanes and partial hydrolyzates thereof

The iminoxysilanes and their partial hydrolyzates of ingredient (B) serve as a crosslinking agent for the ingredient (A).

The iminoxysilanes are of the general formulas (1) and (2). In the formulas (1) and (2), R¹ represents an unsubstituted or substituted monovalent hydrocarbon group having from 1 to 12 carbon atoms, preferably from 1 to 6 carbon atoms and m is an integer of 3 or 4. The monovalent hydrocarbon groups are similar to those groups mentioned with respect to R⁷ of the general formula (4).

In the general formula (1), each R² independently represents a hydrogen atom or an unsubstituted or substituted monovalent hydrocarbon group having from 1 to 12 carbon atoms, preferably from 1 to 6 carbon atoms. The monovalent hydrocarbon group is similar to the group defined with respect to R⁷.

In the general formula (2), R¹ has the same meaning as defined above and R³ represents an unsubstituted or substituted divalent hydrocarbon group having from 4 to 7 carbon atoms. Such a group includes an alkylene group having from 4 to 7 carbon atoms. Specific and preferable examples of the alkylene group include alkylene groups of the following formulas: -(CH₂)₄-, -(CH₂)₅-, -(CH₂)₆-, -(CH₂)₄-, 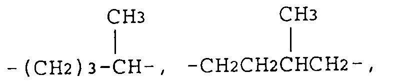 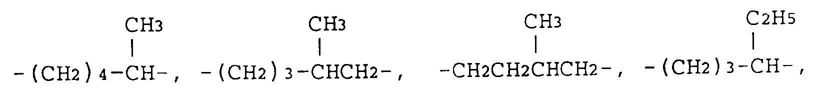
and

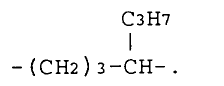

Specific examples of the iminoxysilane of the general formula (1) include methyltri(butanoxime)silane, vinyltri(butanoxime)silane, phenyltri(butanoxime)silane, propyltri(butanoxime)silane tetra(butanoxime)silane, 3,3,3-trifluoropropyltri(butanoxime)silane, 3-chloropropyltri(butanoxime)silane, methyltri(propanoxime)silane, methyltri(pentanoxime)silane, methyltri(isopentanoxime)silane and the like.

Specific and preferred examples of the iminoxysilane of the general formula (2) include methyltri(cyclohexanoxime)silane, vinyltri(cyclopentanoxime)silane and the like.

These iminoxysilanes may be used singly or in combination.

The iminoxysilanes of the general formulas (1) and (2) can be obtained by subjecting corresponding oximes and halogenated silanes to dehydrochlorination reaction using acid acceptors including, for examples, amines such as triethylamine, dimethylaniline and the like and metallic sodium.

The partial hydrolyzates of these iminoxysilanes are obtained by adding an required amount of water to corresponding iminoxysilanes, heating the mixture, and removing the resultant hydroxyimines from the resultant reaction mixture under reduced pressure. By this, part of the iminoxy groups of the iminoxysilane is hydrolyzed into a silanol group. In addition, part of the silanol group is condensed to form siloxane bonds.

The amount of the (B) ingredient is preferably in the range of from 1 to 25 parts by weight, more preferably from 5 to 10 parts by weight, per 100 parts by weight of the diorganopolysiloxane (A). If the amount is too small, gelation may take place when the resultant composition is vulcanized or is under storage. Alternatively, the elastomer obtained after vulcanization of the composition may exhibit only low physical properties. On the contrary, if the (B) ingredient is present in greater amounts, the shrinkage rate of the composition after vulcanization becomes too great, resulting in the lowering of elasticity of the resultant vulcanized product.

### (C) Organic tin catalysts

The organic tin catalyst used as the (C) ingredient serves as a vulcanization catalyst for the ingredients (A) and (B). The tin catalysts ordinarily known in the art may be used in the practice of the invention. Examples of such organic tin catalyst include alkyltin ester compounds such as dibutyltin diacetate, dibutyltin dilaurate, dibutyltin dioctoate and the like, halogenated tin compounds such as dichlorodibutyl tin (IV) and the like. Of these, in view of the catalytic reactivity and the ease in handling, the alkyltin ester compounds are preferred.

The amount of the (C) ingredient is preferably in the range of 0.01 to 10 parts by weight, more preferably from 0.1 to 1 part by weight, per 100 parts by weight of the diorganopolysiloxane (A). If the organic tin catalyst (C) is too small in amount, the following disadvantages are undesirably produced. When the resultant composition is exposed to air, it takes a long time before a non-adhesive film is formed on the surface of the composition. In addition, the composition is unlikely to vulcanize in the inside thereof. If too much an amount is used, the film formation on the surface of the composition is completed within too short a time of several seconds, coupled with poor working properties and a low heat resistance of final vulcanized product.

### (D) Basic fillers

The basic filler (D) contributes to improving resistances to engine oils and gear oils after vulcanization of the composition.

The basic filler (D) includes, for example, metal carbonates such as zinc carbonate, magnesium carbonate, manganese carbonate, calcium carbonate and the like, and metal oxides such as zinc oxide, magnesium oxides and the like. In view of the availability and costs, zinc carbonate, calcium carbonate and zinc oxide are preferably used. The filler should preferably have an average size ranging from 0.01 to 50µm in view of the dispersability thereof.

The amount of the basic filler (D) is generally in the range of 1 to 500 parts by weight, preferably 5 to 100 parts by weight, per 100 parts by weight of the dioraganopolysiloxane (A). If the basic filler (D) is too small in amount, the resultant vulcanized product is not significantly improved in the resistance to engine and gear oils. On the contrary, when the amount is in excess, the resultant vulcanized product does not exhibit satisfactory physical properties.

### (E) Organosilicon compounds

The organosilicon compounds (E) of the general formula (3) indicated hereinbefore are added in order to block functional groups, e.g. hydroxyl group, carbonyl group, carboxyl group and the like, present in the surfaces of the basic filler. The present invention is characterized by incorporation of the compound (E) by which organopolysiloxane composition comprising basic fillers exhibit good shelf life prior to vulcanization.

In the afore-indicated formula (3), each R⁴ represents a hydrogen atom or an unsubstituted or substituted monovalent hydrocarbon, which is similar to those monovalent hydrocarbons of R⁷ in the general formula (4). Each R⁵ independently represents a hydrogen atom or an unsubstituted or substituted monovalent hydrocarbon group as defined with respect to R⁷ in the general formula (4). The alkyl group represented by R⁶ should preferably have from 1 to 8 carbon atoms. Examples of the alkyl group include methyl, ethyl, propyl, butyl, 2-ethylhexyl and the like groups. The alkoxyalkyl group represented by R⁶ should preferably have from 2 to 5 carbon atoms. Examples of the alkoxyalkyl group include methoxymethyl, methoxyethy, ethoxymethyl, propoxymethyl, ethoxyethyl, propoxyethyl and the like.

Specific and preferable examples of the organosilicon compound include methyl 2-(trimethoxysilyl)propionate, ethyl 2-(trimethoxysilyl)propionate 2-ethylhexyl 2-(trimethoxysilyl)propionate, ethyl (methyldimethoxysilyl)acetate, ethyl (dimethylmethoxysilyl)acetate, ethyl (vinyldimethoxysilyl)propionate, 2-ethylhexyl (triethoxysilyl)propionate and mixtures thereof. In view of the reactivity and the availability, methyl 2-(trimethoxysilyl)propionate, 2-ethylhexyl 2-(trimethoxysilyl)propionate and mixtures thereof are preferred.

The organosilicon compounds (E) can be readily prepared by any known process. For example, the compound is prepared according to a process wherein a corresponding β-halogenated ester and a corresponding halogenated silane are coupled in the presence of zinc, followed by substitution of the halogen atoms bonded to the silicon atom or atoms with alkoxy groups by use of bases such as triethylamine and alcohols.

The amount of the (E) ingredient is generally in the range not less than 1 part by weight, more preferably from 1 to 10 parts by weight and most preferably from 1 to 5 parts by weight, per 100 parts by weight of the diorganopolysiloxane (A). If the amount is too small, a good shelf life prior to vulcanization is not ensured. It will be noted that although the (E) ingredient may be used in amounts exceeding 10 parts by weight, a greater effect will not be expected with poor economy.

### Other Ingredients

If necessary, in addition to the (A) to (E) essential ingredients, there may be added, to the composition of the invention, various additives such as reinforcing agents, fibrous fillers, oil-resistance improvers, heat-resistance improvers, freeze-resistance improvers, colorants such as pigments, dyes and the like, thixotropic agents, dehydrating agents, corrosion inhibitors, adhesion modifiers, oil-resistance, adhesion modifiers and the like. These additives may be added in amounts depending on the required physical properties.

Examples of the reinforcing agent include fumed silica, precipitated silica, titanium dioxide, aluminum oxide, quartz powder, talc, bentonite and the like. Examples of the fibrous fillers include asbestos, glass fibers, organic fibers and the like. Examples of the oil-resistance improver include potassium methacrylate. Examples of the heat-resistance improvers include red oxide, cerium oxide and the like. Examples of the thixotropic agent include polyethers. Examples of the adhesion modifier include γ-aminopropyltriethoxysilane and the like. Examples of the oil-resistant, adhesion modifiers include network polysiloxanes comprised of triorganosiloxane units and SiO units.

The composition of the invention is prepared, for example, by uniformly mixing predetermined amounts of the (A) to (D) ingredients, with or without appropriate amounts of additives, in a dry atmosphere, to which a predetermined amount of the organosilicon compound (E) is further added. The resultant mixture is further mixed in a dry atmosphere to obtain a one-pack type room temperature vulcanizable composition. On exposure of the composition to air, the crosslinking reaction is caused to proceed by the action of moisture in air thereby providing a rubbery elastomer.

The vulcanized product obtained from the composition of the invention has good oil resistance and sealability. Thus, the composition is adapted for use as a sealant for FIPS systems and has further utility as a sealing material for portions of apparatus or machines in the fields of building, electric and electronic industries where lubricants are used.

The present invention is more particularly described by way of examples, which should not be construed as limiting the invention thereto.

In the examples, parts are by weight unless otherwise indicated and viscosities are measurements at 25°C.

### Examples 1 to 3 and Comparative Example 1

100 parts of dimethylpolysilioxane terminated at both ends of the molecular chain with a hydroxyl group and having a viscosity of 5200 centistokes was first provided, to which 9.0 parts of vinyltri(butanoxime)silane, 0.2 parts of dibutyltin dioctoate, 1.0 part of γ-aminopropyltriethoxysialne, 8.0 parts of a co-hydrolyzate of trimethylchlorosilane and tetrachlorosilane, 100 parts by weight of zinc carbonate and 20 parts of fumed silica were added, followed by mixing in a moisture-free condition to obtain sample I.

Moreover, 1.0 part of each of methyl 2-(trimethoxysilyl)propionate, ethyl 2-(trimethoxysilyl)propionate and 2-ethylhexyl 2-(trimethoxysilyl)propionate was added to 100 parts of sample I, followed by mixing in a moisture-free condition to provide samples II to IV.

The oil resistance, oil-resistant adhesion and shelf life of the respective samples were evaluated according to the following tests. The results are shown in Tables 1, 2 and 3 shown hereinafter. It will be noted that each vulcanized elastomer was also subjected to physical property tests based on the methods set out in JIS K6301 with respect to hardness, tensile strength and elongation. For the measurement of the hardness, a spring-type hardness tester Model A was used.

### Initial physical property tests of vulcanized products

Samples I to IV were each used to make a 2 mm thick sheet and allowed to stand under conditions of 20°C and 50% R.H. for 7 days to obtain a vulcanized rubber elastomer. These elastomers were subjected to the tests for determining their physical properties.

### Oil resistance test

Like the above physical property tests, samples I to IV were each used to make a 2 mm thick sheet and allowed to stand under conditions of 20°C and 50% R.H. for 7 days to obtain a vulcanized rubber elastomer. These elastomer sheets were each immersed in a gear oil 7.5 W-90 (available from Toyota Co., Ltd. under the designation of Special II) kept at 120°C for 240 hours, followed by measurements of physical properties.

### Oil-resistant adhesion test

The manner of testing the oil-resistant adhesion is described with reference to Fig. 1. In Fig. 1, there is shown an aluminum sheet 1 with a dimension of 100 mm in length x 25 mm in width x 1 mm in thickness (JIS-H4000) . The sheet 1 is polished on one surface thereof with a sand paper. One of Samples I to IV was applied onto the polished surface of the aluminum sheet 1 at one end side thereof. Then, a 2 mm thick teflon sheet was set in position as a spacer as shown in Fig. 1, after which an aluminum sheet 3 (JIS-H4000) having a dimension of 100 mm in length x 25 mm in width x 1 mm in thickness and polished on one surface thereof with a sand paper was placed on the applied end side of the sheet 1 as superposed at one end side of the sheet 3 as shown. Thereafter, a weight 4 of 500 g was placed on the aluminum sheet 3 at the center thereof. In this manner, a sample layer 5 was formed between the sheets 1 and 3.

Subsequently, the thus assembled piece was allowed to stand under conditions of 20°C and 50% R.H. for 96 hours to vulcanize the sample layer 5.

The resultant test piece including the aluminum sheets 1 and 3 and the cured sample layer 5 was immersed in the gear oil 7.5 W-90 for 240 hours, followed by pulling the test piece at opposite ends thereof by use of a tensile tester to measure an adhesive strength under shear.

### Shelf life test

Each of samples I to IV was provided and allowed to stand non-vulcanizing and moisture-free conditions at 70°C for 24, 144 and 240 hours, respectively. Thereafter, each sample was used to make a 2 mm thick sheet and allowed to stand under conditions of 20°C and 50% R.H. for seven days to obtain a vulcanized sheet. The sheet was subjected to measurements of physical properties.

**Table 1**

| Oil-resistance Test | | | | | |
|---|---|---|---|---|---|
| Example No. | | Comp.Ex. 1 | Example 1 | Example 2 | Example 3 |
| Sample No. | | I | II | III | IV |
| Initial Physical Properties of Sample Rubber | hardness | 55 | 57 | 60 | 58 |
| | tensile strength (Kgf/cm²) | 35 | 31 | 35 | 33 |
| | elongation (%) | 250 | 270 | 360 | 270 |
| After Immersion in Gear Oil 7.5W-90 at 120°C for 240 hours | hardness | 38 | 41 | 43 | 40 |
| | tensile strength (Kgf/cm²) | 17 | 18 | 20 | 21 |
| | elongation (%) | 160 | 180 | 210 | 200 |

**Table 2**

| Oil-resistant Adhesion Test | | | | |
|---|---|---|---|---|
| Example No. | Comp.Ex. 1 | Example 1 | Example 2 | Example 3 |
| Sample No. | I | II | III | IV |
| Initial adhesion strength under shear (kgf/cm²) | 15 | 14 | 12 | 10 |
| Adhesion strength under shear after immersion in gear oil 7.5W-90 at 120°C for 240 hours | 10 | 11 | 10 | 12 |

**Table 3**

| Shelf Life Test | | | | | |
|---|---|---|---|---|---|
| Example No. | | Comp.Ex. 1 | Example 1 | Example 2 | Example 3 |
| Sample No. | | I | II | III | IV |
| Initial Physical Properties of Sample Rubber | hardness | 55 | 57 | 60 | 58 |
| | tensile strength (Kgf/cm²) | 35 | 31 | 35 | 33 |
| | elongation (%) | 250 | 270 | 360 | 270 |
| Physical Properties after Storage at 70°C for 72 hours | hardness | 46 | 55 | 57 | 55 |
| | tensile strength (Kgf/cm²) | 21 | 30 | 31 | 32 |
| | elongation (%) | 150 | 210 | 330 | 270 |
| Physical Properties after Storage at 70°C for 144 hours | hardness | 38 | 52 | 55 | 52 |
| | tensile strength (Kgf/cm²) | 5 | 27 | 29 | 31 |
| | elongation (%) | 100 | 200 | 300 | 250 |
| Physical Properties after Storage at 70°C for 240 hours | hardness | not possible to measure | 50 | 52 | 50 |
| | tensile strength (Kgf/cm²) | | 26 | 27 | 27 |
| | elongation (%) | | 220 | 280 | 210 |

### Examples 4, 5 and Comparative Examples 2, 3

100 parts of dimethylpolysilioxane which was blocked with a hydroxyl group at both ends of the molecular chain thereof and had a viscosity of 20,000 centistokes were provided, to which 9.0 parts of vinyl(tributanoxime)silane, 0.1 part of dibutyltin dilaurate, 2.0 parts of γ-aminopropyltriethoxysilane, 60 parts of zinc oxide and 20 parts of fumed silica were added and mixed in a moisture-free condition, thereby obtaining sample V.

The above procedure was repeated using 30 parts of magnesium oxide instead of 60 parts of zinc oxide, thereby obtaining sample VI.

2.0 parts of ethyl 2-trimethoxysilylpropionate was further added to 100 parts of samples V and VI, respectively, and mixed in a moisture-free condition, thereby obtaining samples VII and VIII.

These samples were subjected to an evaluation test in the following manner.

In the same manner as in the shelf life test of Example 1, vulcanized elastomer samples were, respectively, made using samples V to VIII which were obtained immediately after the preparation and after allowing to stand under non-vulcanizing and moisture-free conditions at 70°C for 240 hours. The elastomer samples were then subjected to measurements of physical properties, like the foregoing examples. The results are shown in Table 4 below.

**Table 4**

| Shelf Life Test | | | | | |
|---|---|---|---|---|---|
| Example No. | | Comp.Ex. 2 | Comp.Ex. 3 | Example 4 | Example 5 |
| Sample No. | | V | VI | VII | VIII |
| Initial Physical Properties of Sample Rubber | hardness | 60 | 45 | 62 | 47 |
| | tensile strength (Kgf/cm²) | 45 | 35 | 46 | 37 |
| | elongation (%) | 260 | 250 | 270 | 340 |
| Physical Properties after Storage at 70°C for 240 hours | hardness | not possible to measure | not possible to measure | 60 | 45 |
| | tensile strength (Kgf/cm²) | | | 40 | 32 |
| | elongation (%) | | | 250 | 300 |

From the results of Tables 1 to 4, the vulcanized products obtained from the diorganopolysiloxane compositions of Comparative Examples 1 to 3 comprising zinc carbonate, zinc oxide and magnesium oxide as a basic filler exhibit a good oil resistance but are very poor in the shelf life. On the contrary, the results of Examples 1 to 5 where 2-trimethoxysilylpropionic acid esters are further added reveal that both oil resistance and shelf life are good.

This invention relates to a room temperature vulcanizable organopolysiloxane composition which comprises a diorganopolysiloxane whose molecular chain is terminated with a hydroxyl group at both ends thereof, a crosslinking agent consisting of iminoxysilanes and/or partial hydrolyzates thereof. an organic tin catalyst, and a basic inorganic filler. The composition is characterized by further comprising an organosilicon compound of the following formula 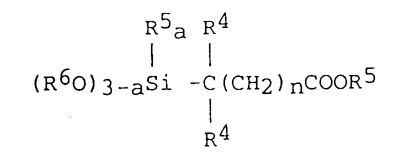
wherein two R⁴'s may be the same or different and independently represent a hydrogen atom or an unsubstituted or substituted monovalent hydrocarbon group, two R⁵'s may be the same or different and independently represent a hydrogen atom or an unsubstituted or substituted monovalent hydrocarbon group, R⁶ represents an alkyl group or an alkoxyalkyl group, a is a value of 0 or 1, n is zero or an integer of 1 to 3. The composition is useful for use as a sealant particularly to FIPG systems.

## Claims

1. A room temperature vulcanizable organopolysiloxane composition which comprises (A) a diorganopolysiloxane terminated with a hydroxyl group at both ends of a molecule chain thereof, (B) at least one compound selected from the group consisting of an iminoxysilane of the following general formula (1) 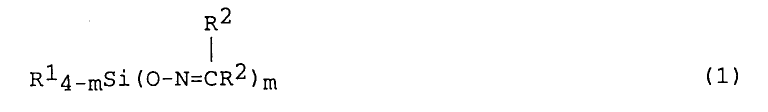 wherein R¹ represents an unsubstituted or substituted monovalent hydrocarbon group having from 1 to 12 carbon atoms, each R² independently represents a hydrogen atom or an unsubstituted or substituted monovalent hydrocarbon group having from 1 to 12 carbon atoms, and m is an integer of 3 or 4, an iminoxysilane of the following general formula (2) 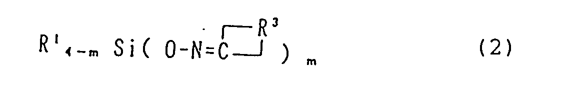 wherein R¹ has the same meaning as defined above, R³ represents an unsubstituted or substituted divalent hydrocarbon group having above, and partial hydrolyzates of the compounds of the above formula (1) and (2), (C) an organic tin catalyst, and (D) a basic filler in the form of powder, characterized in that said composition further comprises an organosilicon compound of the following general formula (3) 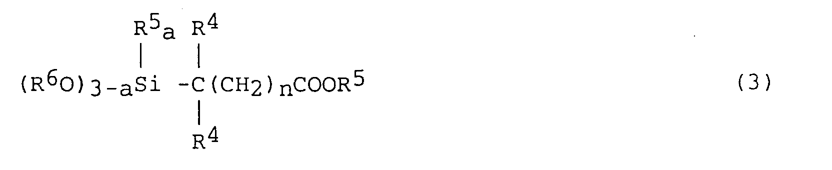 wherein two R⁴'s may be the same or different and independently represent a hydrogen atom or an unsubstituted or substituted monovalent hydrocarbon group having from 1 to 12 carbon atoms, two R⁵'s may be the same or different and independently represent a hydrogen atom or an unsubstituted or substituted monovalent hydrocarbon group having from 1 to 12 carbon atoms, R⁶ represents an alkyl group having from 1 to 8 carbon atoms or an alkoxyalkyl group having from 2 to 5 carbon atoms, a is a value of 0 or 1, n is zero or an integer of 1 to 3, said organosilicon compound being present in an amount of not less than 1 part by weight per 100 pats by weight of said diorganopolyslioxane, said basic filler being present in an amount of 1 to 500 parts by weight per 100 parts by weight of said diorganopolysiloxane.

2. A room temperature vulcanizable composition according to Claim 1, wherein said diorganopolysiloxane has a viscosity of from 25 to 500,000 centistokes at 25°C and is of the following general formula 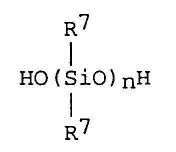 wherein two R⁷'s may be the same or different and independently represent an unsubstituted or substituted monovalent hydrocarbon group having from 1 to 12 carbon atoms and n is an integer of 10 or over.

3. A room temperature vulcanizable composition according to Claim 1, wherein said at least one compound (B) is present in an amount of from 5 to 10 parts by weight per 100 parts by weight of said diorganopolysiloxane.

4. A room temperature vulcanizable composition according to Claim 1, 2 or 3, wherein said organic tin catalyst (C) consists essentially of an alkyltin ester.

5. A room temperature vulcanizable composition according to any of the preceding claims, wherein said organic tin catalyst (C) is present in an amount of from 0.1 to 1 part by weight per 100 parts by weight of said diorganopolysiloxane.

6. A room temperature vulcanizable composition according to any of the preceding claims, wherein said basic filler (D) is a member selected from the group consisting of metal carbonates and metal oxides.

7. A room temperature vulcanizable composition according to any of the preceding claims, wherein said organosilicon compound (E) consists of methyl 2-(trimethoxysilyl)propionate, 2-ethylhexyl 2-(trimethoxysilyl)propionate or a mixture thereof.

8. A room temperature vulcanizable composition according to any of the preceding claims, wherein said organosilicon compound (E) is present in an amount of 1 to 10 parts by weight per 100 parts by weight of said diorganopolysiloxane.

9. A room temperature vulcanizable composition according to any of the preceding claims, wherein said organosilicon compound (E) is present in an amount of 1 to 5 parts by weight per 100 parts by weight of said diorganopolysiloxane.

10. A vulcanized product of the composition defined in any of the preceding claims.
